# EUROPEAN PATENT SPECIFICATION

(11) **EP 3 832 018 B1**
(45) Date of publication and mention of the grant of the patent: **18.12.2024**
(21) Application number: 19844096.8
(22) Date of filing: 02.08.2019
(51) Int. Cl.: E01C 19/48, B60Q 1/02, F21S 41/00

(54) **ASPHALT FINISHER**
ASPHALTFERTIGER
FINISSEUR D'ASPHALTE

(30) Priority: 03.08.2018 JP 2018146897
(43) Date of publication of application: 09.06.2021
(73) Proprietor: Sumitomo (S.H.I.) Construction Machinery Co., Ltd., Shinagawa-ku Tokyo 141-6025 (JP)
(72) Inventor: SAKAKIBARA, Akira, Chiba-shi, Chiba 263-0001 (JP)
(74) Representative: Louis Pöhlau Lohrentz
(86) International application number: PCT/JP2019/030410
(87) International publication number: WO 2020/027313

(56) References cited:
- CN-U- 205 951 811
- DE-A1- 102015 008 315
- JP-A- 2001 138 803
- JP-A- 2002 160 575
- JP-A- 2004 143 894
- JP-A- 2006 062 545
- JP-A- 2006 290 186
- JP-A- 2012 241 454
- JP-A- 2013 079 571
- JP-A- 2017 166 310
- JP-A- 2019 002 205
- JP-U- H 074 166
- JP-U- H0 660 608
- JP-U- H0 731 907
- JP-U- H04 122 709
- US-A- 5 352 063
- WERWIE: "Vögele MT3000-2 Offset Nachtbaustelle A3 Siegburg", 24 March 2014 (2014-03-24), pages 1, XP054982107, Retrieved from the Internet <URL:https://www.youtube.com/watch?v=BB9OO0mU3V4> [retrieved on 20210805]

## Description

### [Technical Field]

The present disclosure relates to an asphalt finisher.

### [Background Art]

Conventionally, an asphalt finisher provided with lighting facilities has been known (see Patent Document 1). The lighting facilities are configured to illuminate work areas during night work.

Moreover, it is known to provide a paver illumination structure, set up the illumination structure at screed both ends, and make things convenient for night observation pitch to lay thickness on the road surface (see Patent Document 2). Further illumination schemes for pavers are known from Documents 3 and 4.

### [Related-Art documents]

### [Patent Documents]

Patent Document 1: Japanese Laid-Open Patent Application No. 2004-116448
Patent Document 2: Chinese Patent Application CN 205 951 811 U
Patent Document 3: Japanese Patent Application JP H04 122709 U
Patent Document 4: German Patent Application DE 10 2015 008 315 A1

### [Summary of the Invention]

### [Problem to be Solved by the Invention]

However, the lighting facilities described above are not configured to illuminate parts protruding out of the width of a tractor, such as a bucket and a screed. Therefore, the parts protruding out of the width of the tractor may not be visible from the surroundings.

Thereupon, it is desirable to provide an asphalt finisher that can improve the visibility of the parts protruding out of the width of the tractor.

### [Means to Solve the Problem]

The aforementioned objective is achieved by an asphalt finisher according to claim 1.

### [Advantage of the Invention]

The asphalt finisher according to the invention can improve the visibility of the parts protruding out of the width of the tractor

### [Brief Description of the Drawings]

FIG. 1A is a side view of an asphalt finisher;
FIG. 1B is a top view of the asphalt finisher;
FIG. 1C is a top view of the asphalt finisher;
FIG. 2 is a perspective view of a right rear extensible/contractible screed; and
FIG. 3 is a side view of the right rear extensible/contractible screed.

### [Mode for Carrying Out the Invention]

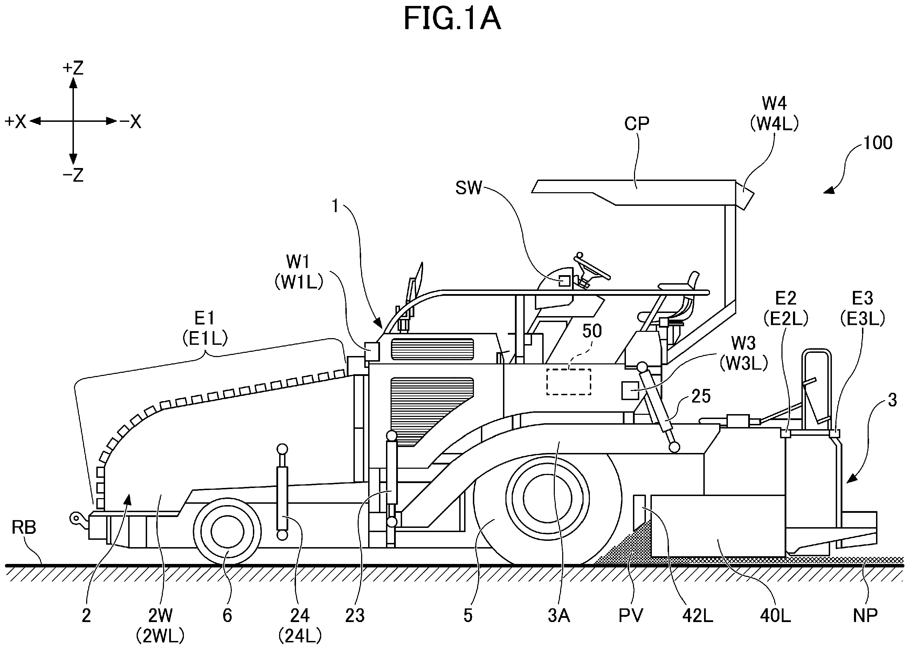

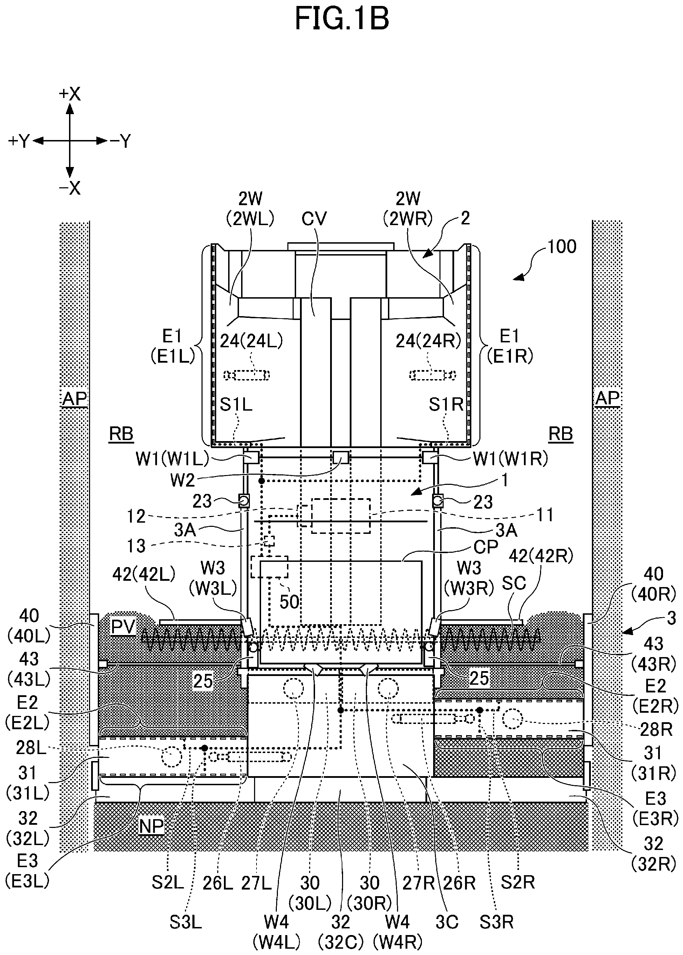

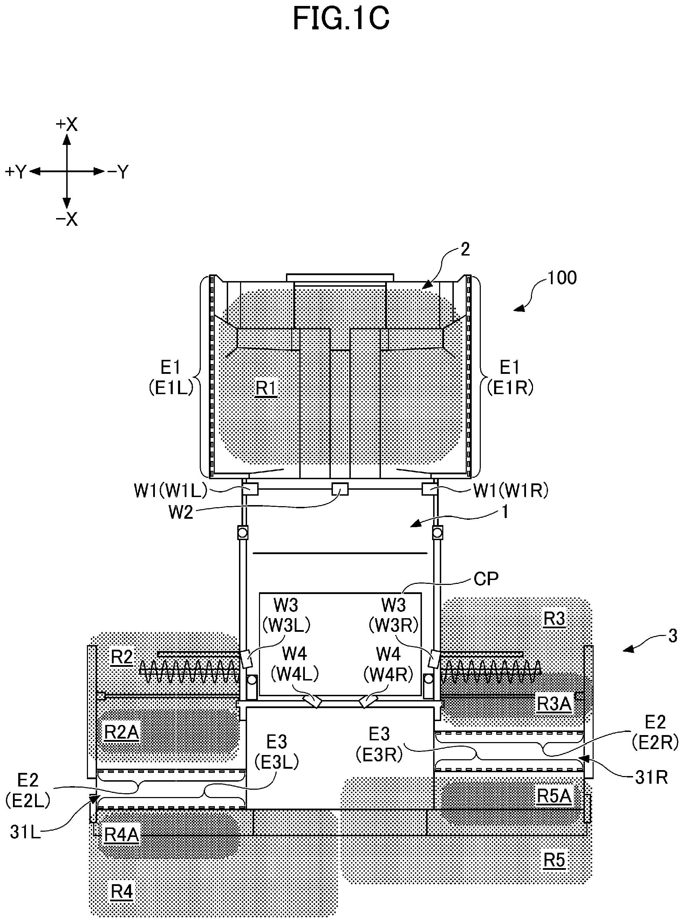

FIGs. 1A to 1C illustrate an example of an asphalt finisher 100 as an example of a road machine according to an embodiment of the present invention. Specifically, FIG. 1A is a side view of the asphalt finisher 100, and FIGs. 1B and 1C are top views of the asphalt finisher 100. The coarsest dot patterns AP in FIG. 1B indicate surfaces of existing pavement or the like, and a cross pattern NP indicates a new pavement.

The asphalt finisher 100 is primarily constituted with a tractor 1, a hopper 2, and a screed 3. In the following, the direction of the hopper 2 viewed from the tractor 1 (+X direction) is assumed to be the front, and the direction of the screed 3 viewed from the tractor 1 (-X direction) is assumed to be the rear.

The tractor 1 is a mechanism for causing the asphalt finisher 100 to travel. In the present embodiment, the tractor 1 rotates rear wheels 5 by using rear-wheel traction motors, and rotates front wheels 6 by using front-wheel traction motors, to move the asphalt finisher 100. The rear-wheel traction motors and the front-wheel traction motors receive supply of hydraulic oil from the hydraulic pump, to rotate. The rear wheels 5 and the front wheels 6 may be replaced with crawlers.

A controller 50 is a control device to control the asphalt finisher 100. In the present embodiment, the controller 50 is constituted with an arithmetic/logic processing device including a CPU, a volatile storage device, and a non-volatile storage device, and installed in the tractor 1. Various functions of the controller 50 are implemented by the CPU executing programs stored in the non-volatile storage device.

The hopper 2 is a mechanism for receiving paving materials. In the present embodiment, the hopper 2 is arranged in front of the tractor 1, and includes hopper wings 2W. The hopper wings 2W are configured to be capable of being opened and closed in the Y-axis direction (the vehicle-width direction) by hopper cylinders 24.

Specifically, the hopper wings 2W include a left hopper wing 2WL and a right hopper wing 2WR, and the hopper cylinders 24 include a left hopper cylinder 24L and a right hopper cylinder 24R. Further, the left hopper wing 2WL is configured to be capable of being opened and closed by the left hopper cylinder 24L in the Y-axis direction (the vehicle-width direction), and the right hopper wing 2WR is configured to be capable of being opened and closed by the right hopper cylinder 24R in the Y-axis direction (the vehicle-width direction). When the hopper wings 2W open, the hopper wings 2W protrude out of the width of the tractor 1 (the length in the Y-axis direction); therefore, the width of the asphalt finisher 100 (the length in the Y-axis direction) becomes greater.

The asphalt finisher 100 normally receives a paving material (e.g., an asphalt mixture) from the bed of a dump truck with the hopper wings 2W in a fully opened state. FIGs. 1A to 1C illustrate the hopper wings 2W in a fully opened state. When the paving material in the hopper 2 decreases, the hopper wings 2W are closed, and the paving material remaining near the inner walls of the hopper wings 2W is collected to be gathered at the center of the hopper 2. This is to allow a conveyor CV at the center of the hopper 2 to feed the paving material behind the tractor 1. The paving material fed behind the tractor 1 is laid and spread by a screw SC in the vehicle-width direction behind the tractor 1 and in front of the screed 3. In the present embodiment, the screw SC is in a state where extension screws are connected on the left and on the right.

The screed 3 is a mechanism for laying and leveling the pavement material. In the present embodiment, the screed 3 primarily includes front screeds 30 and rear screed extensions 31 being extensible/contractible screeds 31. The screed 3 is a floating screed towed by the tractor 1 and coupled with the tractor 1 via leveling arms 3A. The screed 3 is moved up and down together with the leveling arms 3A by extension and contraction of screed lift cylinders 25.

The front screeds 30 include a left front screed 30L and a right front screed 30R, and the rear extensible/contractible screeds 31 include a left rear extensible/contractible screed 31L and a right rear extensible/contractible screed 31R. The left rear extensible/contractible screed 31L is extended or contracted in the vehicle-width direction by using a screed extension cylinder 26L, and the right rear extensible/contractible screed 31R is extended or contracted in the vehicle-width direction by using a screed extension cylinder 26R. When the rear extensible/contractible screeds 31 extend, the width of the asphalt finisher 100 (the length in the Y-axis direction) becomes greater because the rear extensible/contractible screeds 31 protrude out of the width of the tractor 1.

In order to compact the pavement, the left front screed 30L is vibrated by a left front vibrator 27L, and the right front screed 30R is vibrated by a right front vibrator 27R. Similarly, the left rear extensible/contractible screed 31L is vibrated by a left rear vibrator 28L, and the right rear extensible/contractible screed 31R is vibrated by a right rear vibrator 28R.

Leveling cylinders 23 are hydraulic cylinders that move the front end parts of the leveling arms 3A up and down to spread and level the asphalt mixture so as to adjust the thickness.

Side plates 40 are attached to the ends of the screed 3. The side plates 40 limit excessive spread of the paving material PV laid and spread by the screw SC in the vehicle-width direction. FIGs. 1A and 1B illustrate the paving material PV to be laid and spread by the screw SC with fine dot patterns. The side plates 40 include a right side plate 40R extending forward from the right rear extensible/contractible screed 31R, and a left side plate 40L extending from the left rear extensible/contractible screed 31L.

Retaining plates 42 are attached to the sides of the tractor 1. The retaining plates 42 prevent the paving material PV from spattering forward in the vicinity of the tractor 1 (particularly the rear wheels 5) due to rotation of the screw SC. In the present embodiment, the retaining plates 42 include a right retaining plate 42R attached to the right side surface of the tractor 1, and a left retaining plate 42L attached to the left side surface of the tractor 1. The left retaining plate 42L is attached to the left side surface of the tractor 1, to be rotatable (collapsible). The same applies to the right retaining plate 42R.

Extensible/contractible moldboards 43 are attached to the front of the screed 3. The extensible/contractible moldboards 43 constitute a mechanism for adjusting the amount of the paving material PV remaining in front of the screed 3. In the present embodiment, the extensible/contractible moldboards 43 are configured to be extensible and contractible by hydraulic actuators (not illustrated) in accordance with extension and contraction of the rear extensible/contractible screeds 31. The paving material PV passes through gaps between the lower ends of the extensible/contractible moldboards 43 and a roadbed RB, to reach a space beneath the screed 3. In the present embodiment, the extensible/contractible moldboards 43 include a right extensible/contractible moldboard 43R attached in front of the right rear extensible/contractible screed 31R, and a left extensible/contractible moldboard 43L attached in front of the left rear extensible/contractible screed 31L. The left extensible/contractible moldboard 43L is configured to be adjustable in height in the Z-axis direction, irrespective of the left side plate 40L and the left rear extensible/contractible screed 31L. This is to adjust the amount of paving material remaining in front of the left rear extensible/contractible screed 31L, by moving the left extensible/contractible moldboard 43L up and down. The same applies to the right extensible/contractible moldboard 43R.

Steps 32 are attached to the rear of the screed 3. The steps 32 are footholds that can be used by the operator. In the present embodiment, the steps 32 include a central step 32C attached to the rear of the front screed 30, a right step 32R attached to the rear of the right rear extensible/contractible screed 31R, and a left step 32L attached to the rear of the left rear extensible/contractible screed 31L.

The asphalt finisher 100 is provided with working lights W1 to W4. In the present embodiment, the working lights W1 to W4 illuminate predetermined spaces by typically using power generated by a generator 12 (an alternator) installed in the tractor 1. The generator 12 is driven by an engine 11 as the drive source installed in the tractor 1. However, the working lights W1 to W4 may illuminate predetermined spaces by using power of a storage battery 13 as a battery installed in the tractor 1.

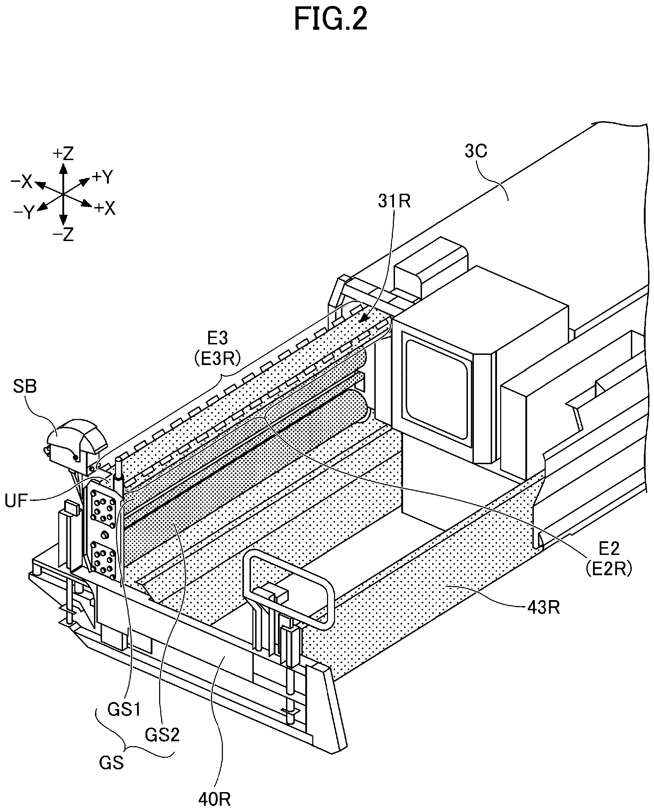

In the present embodiment, the working lights W1 to W4 are LED lamps. However, the working lights W1 to W4 may be HID lamps, halogen lamps, or the like. The working lights W1 to W4 are configured to be switched between turned-on and turned-off states typically by a switch SW. As illustrated in FIG. 1A, the switch SW is typically included in an operation panel arranged in front of the driver's seat. However, the switch SW may be arranged in another part of the asphalt finisher 100, such as in an operation box SB (see FIG. 2) arranged on the screed 3. The working lights W1 to W4 may be configured be switched between turned-on and turned-off states by a single switch SW, or may be configured be switched between turned-on and turned-off states by separate switches SW.

The working lights W1 are headlights illuminating a space in front of (in the traveling direction of) the asphalt finisher 100. As illustrated in FIG. 1B, the working lights W1 include a left headlight W1L arranged at the left end of the front end of the tractor 1, and a right headlight W1R arranged at the right end of the front end of the tractor 1.

The working light W2 illuminates the interior of the hopper 2. As illustrated in FIG. 1B, the working light W2 is arranged at the center of the front end of the tractor 1, to illuminate an area R1 inside the hopper 2 designated by a coarse dot pattern in FIG. 1C.

The working lights W3 illuminate spaces in front of the rear extensible/contractible screeds 31. As illustrated in FIGs. 1A and 1B, the working lights W3 are arranged on the sidewalls of the tractor 1. Specifically, the working lights W3 include a left sidelight W3L and a right sidelight W3R. The left sidelight W3L illuminates an area R2 in front of the left rear extensible/contractible screed 31L designated by a coarse dot pattern in FIG. 1C. The right sidelight W3R illuminates an area R3 in front of the right rear extensible/contractible screed 31R designated by a coarse dot pattern in FIG. 1C.

The working lights W4 illuminate spaces behind the rear extensible/contractible screeds 31. As illustrated in FIGs. 1A and 1B, the working lights W4 are arranged at the rear end of a canopy CP. Specifically, the working lights W4 include a left backlight W4L and a right backlight W4R. The left backlight W4L illuminates an area R4 on the left and behind the left rear extensible/contractible screed 31L designated by a coarse dot pattern in FIG. 1C. The right backlight W4R illuminates an area R5 on the right and behind the right rear extensible/contractible screed 31R designated by a coarse dot pattern in FIG. 1C.

The asphalt finisher 100 is provided with light emitting parts that are arranged consecutively or separately at protruding parts that protrude out of the width of the tractor 1. In the present embodiment, the protruding parts include the hopper 2, the rear extensible/contractible screeds 31, the extensible/contractible moldboards 43, and the like. The light emitting parts are included in the form caution lights to E3.

In the present embodiment, the caution lights E1 to E3 emit light by typically using power generated by the generator 12 (an alternator), similar to the working lights W1 to W4. However, the caution lights E1 to E3 may emit light by using power of the battery 13 installed in the tractor 1.

The caution lights E1 to E3 are LED ribbon lights in the present embodiment. However, the caution lights E1 to E3 may be filament lamps, xenon lamps, or the like. The caution lights E1 to E3 are configured to be typically turned on when the working lights W1 to W4 are turned on. In the present embodiment, the caution lights E1 to E3 are configured to be turned on when the working lights W1 to W4 are turned on by the switch SW, and to be turned off when the working lights W1 to W4 are turned off by the switch SW. However, the caution lights E1 to E3 may be switched between on and off irrespective of the working lights W1 to W4.

For example, the caution lights E1 to E3 may be configured to be automatically turned on when the surroundings are determined to become dark based on the output of an irradiation sensor (not illustrated).

Each of the caution lights E1 to E3 may be configured to emit light in any lighting/blinking mode such as continuous lighting, simultaneous blinking, sequential blinking, or the like. Continuous lighting designates a lighting mode, for example, in which all of the multiple LEDs constituting the caution lights E2 are lit continuously. Simultaneous blinking designates a blinking mode, for example, in which each of the multiple LEDs constituting the caution lights E2 blinks at the same timing. Sequential blinking designates a blinking mode in which each of the multiple LEDs constituting the caution lights E2 blinks at a timing different from one another and in a predetermined order. A lighting/blinking mode may be configured to vary depending on the state of protrusion, the protrusion speed, or the like of the protruding parts. The protrusion speed includes, for example, the opening/closing speed of the hopper 2, the extension and contraction speed of the rear extensible/contractible screeds 31, the extension and contraction speed of the extensible/contractible moldboards 43, and the like.

The caution lights E1 increase the visibility of the hopper wings 2W as the protruding parts. As illustrated in FIG. 1B, the caution lights E1 include a left ribbon light E1L arranged along the end surface at the edge of the left hopper wing 2WL, and a right ribbon light E1R arranged along the end surface at the edge of the right hopper wing 2WR. The left ribbon light E1L is connected to the controller 50 via a signal line S1L, and the right ribbon light E1R is connected to the controller 50 via a signal line S1R. Note that the caution lights E1 may be arranged at portions of the hopper wings 2W close to the edges of the outer walls.

With this configuration, the driver of a dump truck supplying the paving material to the hopper 2 can easily recognize an opening/closing state of the hopper wings 2W when moving backward toward the asphalt finisher 100 during night work. Also, the driver of a vehicle driving on an existing road adjacent to the road under construction can easily recognize an opening/closing state of the hopper wings 2W, when approaching the asphalt finisher 100 from the front side (+X side) while driving in the night.

The caution lights E2 increase the visibility from the front side of the rear extensible/contractible screeds 31 as the protruding parts. As illustrated in FIG. 1B, the caution lights E2 include a left front ribbon light E2L arranged along the front edge of the top surface of the left rear extensible/contractible screed 31L, and a right front ribbon light E2R arranged along the front edge of the top surface of the right rear extensible/contractible screed 31R. The left front ribbon light E2L is connected to the controller 50 via a signal line S2L, and the right front ribbon light E2R is connected to the controller 50 via a signal line S2R.

The left front ribbon light E2L illuminates an area R2A in front of the left rear extensible/contractible screed 31L designated by a fine dot pattern in FIG. 1C. The area R2A is part of the area R2. The right front ribbon light E2R illuminates an area R3A in front of the right rear extensible/contractible screed 31R designated by a fine dot pattern in FIG. 1C. The area R3A is part of the area R3.

With this configuration, the driver of a vehicle driving on an existing road adjacent to the road under construction can easily recognize the state of extension and contraction of the rear extensible/contractible screeds 31, when approaching the asphalt finisher 100 from the front side (+X side) while driving in the night. Also, the caution lights E2 may also function as auxiliary lights to assist illumination by the working lights W3.

The caution lights E3 increase the visibility from behind the rear extensible/contractible screeds 31 as the protruding parts. As illustrated in FIG. 1B, the caution lights E3 include a left rear ribbon light E3L arranged along the rear edge of the top surface of the left rear extensible/contractible screed 31L, and a right rear ribbon light E3R arranged along the rear edge of the top surface of the right rear extensible/contractible screed 31R. The left rear ribbon light E3L is connected to the controller 50 via a signal line S3L, and the right rear ribbon light E3R is connected to the controller 50 via a signal line S3R.

The left rear ribbon light E3L illuminates an area R4A behind the left rear extensible/contractible screed 31L designated by a fine dot pattern in FIG. 1C. The area R4A is part of the area R4. The right rear ribbon light E3R illuminates an area R5A behind the right rear extensible/contractible screed 31R designated by a fine dot pattern in FIG. 1C. The area R5A is part of the area R5.

With this configuration, the driver of a vehicle driving on an existing road adjacent to the road under construction can easily recognize the state of extension and contraction of the rear extensible/contractible screeds 31, when approaching the asphalt finisher 100 from behind (-X side) while driving in the night. Also, the caution lights E3 may also function as auxiliary lights to assist illumination by the working lights W4.

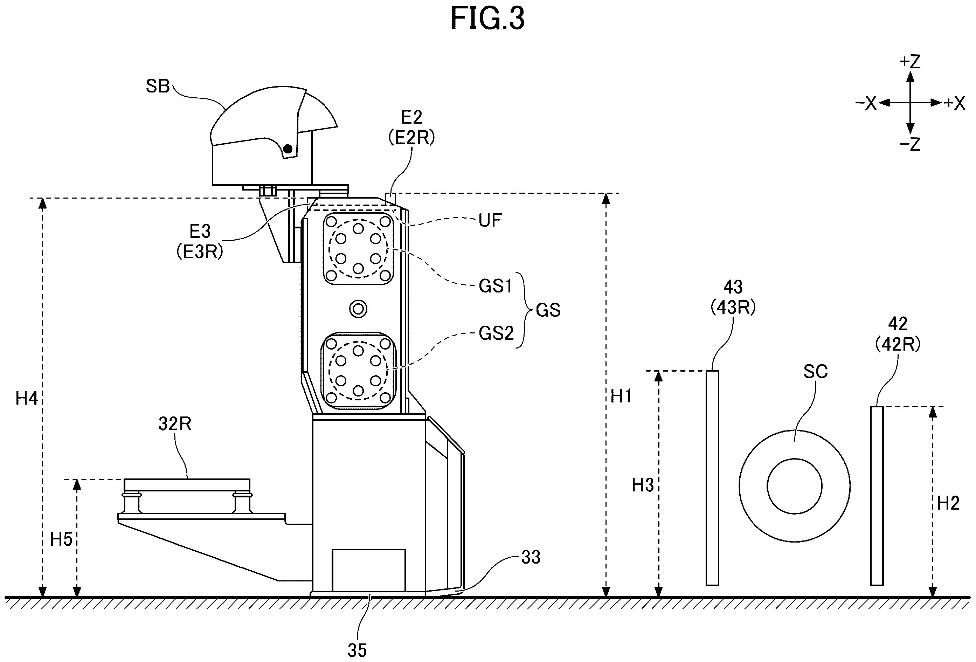

Next, with reference to FIGs. 2 and 3, the rear extensible/contractible screeds 31 will be described. FIG. 2 is a perspective view of the right rear extensible/contractible screed 31R. FIG. 3 is a side view of the right rear extensible/contractible screed 31R as viewed from the -Y side (right side) of the right rear extensible/contractible screed 31R. However, FIG. 3 omits illustration of the right side plate 40R for the sake of clarification. The following description of the right rear extensible/contractible screed 31R also applies to the left rear extensible/contractible screed 31L.

As illustrated in FIGs. 2 and 3, the right rear extensible/contractible screed 31R is primarily constituted with a shaft cover UF, guide shafts GS, a strike-off plate 33, and a screed plate 35. Further, as illustrated in FIG. 3, the -Z side part (bottom part) of the right rear extensible/contractible screed 31R is primarily constituted with the strike-off plate 33 and the screed plate 35.

The shaft cover UF is a member that constitutes the top end of the right rear extensible/contractible screed 31R. In the present embodiment, the shaft cover UF is formed to be virtually a rectangular parallelepiped, and configured to cover the top of the guide shafts GS.

The guide shafts GS are configured to guide extension and contraction of the right rear extensible/contractible screed 31R. In the present embodiment, the guide shafts GS include an upper guide shaft GS1 and a lower guide shaft GS2.

The strike-off plate 33 is a member to swallow (push) the paving material PV, that has been laid and spread by the screw SC and adjusted in quantity by the right extensible/contractible moldboard 43R, under the right rear extensible/contractible screed 31R. In the present embodiment, the strike-off plate 33 extends over the entire span of the right rear extensible/contractible screed 31R in the Y-axis direction (the vehicle-width direction), and has an inclined surface inclined with respect to the -Z side surface (bottom surface) of the screed plate 35 provided at the lower part. The inclined surface of the strike-off plate 33 and the bottom surface of the screed plate 35 form a swallowing angle of the paving material.

The screed plate 35 is a member constituting the bottom part of the rear extensible/contractible screed 31 vibrated by a vibrator, to compact the paving material PV swallowed through a space between the roadbed RB and the strike-off plate 33. In the present embodiment, the screed plate 35 extends over the entire span of the rear extensible/contractible screed 31 in the vehicle-width direction.

The operation box SB is a device used by the operator working behind the asphalt finisher 100 to operate the asphalt finisher 100. In the present embodiment, the operation box SB includes a lever switch, a push switch, a monitor, and the like (not illustrated), and is configured to allow the operator to adjust the state of extension and contraction of the leveling cylinders 23, the state of extension and contraction of the rear extensible/contractible screeds 31, and the spreading speed (operating speed) of the conveyor CV.

The right front ribbon light E2R is arranged along the extension/contraction direction (Y-axis direction) at the front edge (the edge on the +X side) of the top surface of the shaft cover UF being virtually a rectangular parallelepiped constituting the right rear extensible/contractible screed 31R. Specifically, the right front ribbon light E2R has a configuration in which 15 LEDs are separately arranged at predetermined equidistant intervals. The LEDs have the same size. However, the LEDs may be arranged separately at non-equidistant intervals, or may be arranged consecutively so that the LEDs are contiguous to one another in the extension/contraction direction. Also, the LEDs may have different sizes. Also, the right front ribbon light E2R may be constituted with a single elongated LED. The same applies to the left front ribbon light E2L.

The right front ribbon light E2R may be configured to emit light in any luminescent color. In the present embodiment, the right front ribbon light E2R is configured to emit light in the same color as the right sidelight W3R. However, the right front ribbon light E2R may be configured to emit light in a luminescent color different from that of the right sidelight W3R. The same applies to the left front ribbon light E2L.

The right front ribbon light E2R may be arranged on the front surface of the shaft cover UF (surface on the +X side), or may be arranged on the front edge of the lower surface of the shaft cover UF. Also, the right front ribbon light E2R may be arranged on another member constituting the right rear extensible/contractible screed 31R (desirably an elongated member extending in the extension/contraction direction). The same applies to the left front ribbon light E2L.

The right front ribbon light E2R is desirably arranged at a relatively high position so as not to be hidden behind other members when viewed by the operator and the like from the front side (+X side). In the present embodiment, as illustrated in FIG. 3, a height H1 of the right front ribbon light E2R from the ground is higher than a height H2 of the right retaining plate 42R from the ground, and higher than a height H3 of the right extensible/contractible moldboard 43R from the ground. The same applies to the left front ribbon light E2L.

The right rear ribbon light E3R is arranged along the extension/contraction direction (Y-axis direction) at the rear edge (the edge on the -X side) of the top surface of the shaft cover UF of the right rear extensible/contractible screed 31R. Specifically, as in the case of the right front ribbon light E2R, the right rear ribbon light E3R has a configuration in which 15 LEDs are separately arranged at predetermined equidistant intervals. The LEDs have the same size. However, the LEDs may be arranged separately at non-equidistant intervals, or may be arranged consecutively so that the LEDs are contiguous to one another in the extension/contraction direction. Also, the LEDs may have different sizes. Also, the right rear ribbon light E3R may be constituted with a single elongated LED. The same applies to the left rear ribbon light E3L.

The right rear ribbon light E3R may be configured to emit light in any luminescent color. In the present embodiment, the right rear ribbon light E3R is configured to emit light of the same color as the right backlight W4R. However, the right rear ribbon light E3R may be configured to emit light in a luminescent color different from that of the right backlight W4R. The same applies to the left rear ribbon light E3L.

The right rear ribbon light E3R may be arranged on the rear surface of the shaft cover UF (surface on the -X side), or may be arranged on the rear edge of the lower surface of the shaft cover UF. Also, the right rear ribbon light E3R may be arranged on another member constituting the right rear extensible/contractible screed 31R (desirably an elongated member extending in the extension/contraction direction). The same applies to the left rear ribbon light E3L.

The right rear ribbon light E3R is arranged at a relatively high position so as not to be hidden behind other members when viewed from the rear side (+X side). In the present embodiment, as illustrated in FIG. 3, a height H4 of the right rear ribbon light E3R from the ground is higher than a height H5 of the right step 32R from the ground. The same applies to the left rear ribbon light E3L.

Both the right front ribbon light E2R and the right rear ribbon light E3R are attached to the right rear extensible/contractible screed 31R, so as not to hinder the right rear extensible/contractible screed 31R from being housed in a screed cover 3C. Therefore, in the present embodiment, the right front ribbon light E2R and the right rear ribbon light E3R are configured to be housed in the screed cover 3C together with the right rear extensible/contractible screed 31R. In other words, the caution lights E3 as the light emitting parts are configured to be housed in the screed cover 3C when the rear extensible/contractible screeds 31 are in a contracted state. However, the right front ribbon light E2R and the right rear ribbon light E3R may be configured to be easily attachable to and detachable from the right rear extensible/contractible screed 31R. For example, the LEDs may be configured to be easily attachable and detachable. In this case, the right front ribbon light E2R and the right rear ribbon light E3R may be detached from the right rear extensible/contractible screed 31R when the right rear extensible/contractible screed 31R is to be housed in the screed cover 3C. The same applies to the left front ribbon light E2L and the left rear ribbon light E3L.

As described above, the asphalt finisher 100 includes the tractor 1, the protruding parts protruding out of the width of the tractor 1, and the light emitting parts arranged consecutively or separately on the protruding parts. The protruding parts include the rear extensible/contractible screeds 31, and for example the hopper 2, the extensible/contractible moldboards 43, and the like. The light emitting parts are included as the caution lights E1 to E3.

With this configuration, the asphalt finisher 100 can improve the visibility of the parts protruding out of the width of the tractor 1. Therefore, a person viewing the asphalt finisher 100 from the outside can easily recognize the presence of the protruding parts, such as the hopper 2, the rear extensible/contractible screeds 31, the extensible/contractible moldboards 43, and the like even in the night. As a result, the asphalt finisher 100 can increase the safety of the work.

The caution lights E2 and E3 comprise the light emitting parts arranged consecutively or separately along the extension/contraction direction of the rear extensible/contractible screeds 31. With this configuration, a person viewing the asphalt finisher 100 from the outside can easily recognize that the rear extensible/contractible screeds 31 extend continuously in the vehicle-width direction, namely, the rear extensible/contractible screeds 31 are connected to the main body of the asphalt finisher 100. Therefore, this configuration can prevent, for example, a person viewing the asphalt finisher 100 from the outside from erroneously recognizing that gaps (spaces) are present between the main body of the asphalt finisher 100 and the ends of the rear extensible/contractible screeds 31.

The protruding parts are at least the rear extensible/contractible screeds 31 that are extendable and contractible in the vehicle-width direction. In this case, the caution lights E2 and E3 may have the light emitting parts arranged to illuminate spaces in front of and behind the rear extensible/contractible screeds 31. With this configuration, the asphalt finisher 100 can illuminate the spaces in front of and behind the rear extensible/contractible screeds 31 more brightly than in the case of illuminating only with the working lights W3 and W4. As a result, for example, the operator working around the asphalt finisher 100 can easily confirm the amount of the paving material PV carried around the screw SC even in the night.

The protruding parts may be the extensible/contractible moldboards 43 that are extendable and contractible in the vehicle-width direction. In this case, the light emitting parts may be arranged consecutively or separately on the extensible/contractible moldboards 43 along the extension/contraction direction of the extensible/contractible moldboards 43. With this configuration, the asphalt finisher 100 can improve the visibility of the extensible/contractible moldboards 43.

The protruding parts may be the hopper 2 that can be opened and closed in the vehicle-width direction. Specifically, the protruding parts may be the hopper wings 2W that can be opened and closed in the vehicle-width direction. In this case, the caution lights E1 may have the light emitting parts arranged consecutively or separately along the end surfaces of the hopper wings 2W. With this configuration, the asphalt finisher 100 can improve the visibility of the hopper 2.

The asphalt finisher 100 is typically provided with the working lights W1 to W4. Therefore, the caution lights E1 to E3 may be configured to be turned on when the working lights W1 to W4 are turned on. With this configuration, the operator can securely turn on the caution lights E1 to E3 when turning on the working lights W1 to W4. Therefore, the caution lights E1 to E3 can be prevented from being left turned off when night work starts.

As described above, favorable embodiments according to the present invention have been described. However, the present invention is not limited to the embodiments described above. Various modifications, substitutions, and the like may be applied to the embodiments described above without deviating from the scope of the present invention.

For example, in the embodiments described above, the caution lights E1 may be arranged along the end surfaces of the edges of the hopper wings 2W, the caution lights E2 may be arranged along the front edges of the top surfaces of the rear extensible/contractible screeds 31, and the caution lights E3 may be arranged along the rear edges of the top surfaces of the rear extensible/contractible screeds 31. However, the caution lights may be arranged at the front and the rear of the screed cover 3C. For example, the caution light may be arranged along the front edge of the top surface of the screed cover 3C, and a caution light may be arranged along the rear edge of the top surface of the screed cover 3C.

### [Description of Reference Symbols]

1 tractor
2 hopper
2W hopper wing
2WL left hopper wing
2WR right hopper wing
3 screed
3a leveling arm
5 rear wheel
6 front wheel
11 engine
12 generator
13 storage battery
23 leveling cylinder
24 hopper cylinder
25 screed lift cylinder
26L, 26R screed extension/contraction cylinder
27L left front vibrator
27R right front vibrator
28L left rear vibrator
28R right rear vibrator
30 front screed
31 rear extensible/contractible screed
32 step
33 strike-off plate
35 screed plate
40 side plate
42 retaining plate
43 extensible/contractible moldboard
50 controller
100 asphalt finisher
CP canopy
CV conveyor
E1 to E3 caution light
PV paving material
RB roadbed
S1L, S1R, S2L, S2R, S3L, S3R signal line
SC screw
SW switch
UF shaft cover
W1 to W4 working light

## Claims

1. An asphalt finisher (100) comprising:
a tractor (1);
a protruding part (2, 31, 43) protruding out of a width of the tractor (1); and
a caution light (E1, E2, E3) arranged on the protruding part (2, 31, 43) so as to increase the visibility of the protruding part (2, 31, 43)
wherein the protruding part is screed extension (31) that is extendable and contractible in a vehicle-width direction, and
wherein the caution light (E2,E3)arranged on the screed extension (31) includes a plurality of light emitting parts, and the plurality of light emitting parts are arranged consecutively or separately along an extension/contraction direction of the screed extension (31).

2. The asphalt finisher (100) as claimed in claim 1, wherein the caution light (E2, E3) is arranged to illuminate a space in front of and a space behind the screed extension (31).

3. The asphalt finisher (100) as claimed in claim 1, comprising a further protruding part being an extensible/contractible moldboard (43) that is extendable and contractible in a vehicle-width direction, and
wherein
light emitting parts are consecutively or separately arranged on the extensible/contractible moldboard (43) along an extension/contraction direction of the extensible/contractible moldboard (43).

4. The asphalt finisher (100) as claimed in claim 1, comprising a further protruding part being
a hopper (2) that can be opened and closed in a vehicle-width direction, and a caution light (E1) arranged along an end surface of the hopper (2),
wherein the light emitting parts of the caution light (E1) are arranged consecutively or separately along the end surface of the hopper (2).

5. The asphalt finisher (100) as claimed in claim 1, further comprising: a working light (W1-W4),
wherein the caution light (E1, E2, E3) is configured to be turned on when the working light (W1-W4) is turned on.

6. The asphalt finisher (100) as claimed in claim 1, wherein, the caution light (E2, E3) is configured to be housed in a screed cover while the extension/contraction screed (31) is in a contracted state.

7. The asphalt finisher (100) as claimed in claim 6, wherein the caution light (E2, E3) is arranged at a front of and a rear of the screed cover.

8. The asphalt finisher (100) as claimed in claim 1, wherein caution light (E1, E2, E3) is configured to blink.

## Patentansprüche

1. Asphaltfertiger (100), umfassend:
einen Traktor (1);
ein vorstehendes Teil (2, 31, 43), das über eine Breite des Traktors (1) vorsteht; und
eine Warnleuchte (E1, E2, E3), die an dem vorstehenden Teil (2, 31, 43) angeordnet ist, um die Sichtbarkeit des vorstehenden Teils zu erhöhen,
wobei das vorstehende Teil eine Bohlenverlängerung (31) ist, die in einer Fahrzeugbreitenrichtung verlängerbar und zusammenziehbar ist, und
wobei die Warnleuchte (E2, E3) an der Bohlenverlängerung (31) angebracht ist, mehrere lichtemittierende Teile umfasst und die mehreren lichtemittierenden Teile aufeinanderfolgend oder separat entlang einer Verlängerungs-/Zusammenziehrichtung der Bohlenverlängerung (31) angeordnet sind.

2. Asphaltfertiger (100) nach Anspruch 1, wobei die Warnleuchte (E2, E3) so angeordnet ist, dass sie einen Raum vor und einen Raum hinter der Bohlenverlängerung (31) beleuchtet.

3. Asphaltfertiger (100) nach Anspruch 1, umfassend ein weiteres vorstehendes Teil, das eine verlängerbare/zusammenziehbare Formplatte (43) ist, die in einer Fahrzeugbreitenrichtung verlängerbar und zusammenziehbar ist, und
wobei lichtemittierende Teile aufeinanderfolgend oder separat an der verlängerbaren/zusammenziehbaren Formplatte (43) entlang einer Verlängerungs-/Zusammenziehrichtung der verlängerbaren/zusammenziehbaren Formplatte (43) angeordnet sind.

4. Asphaltfertiger (100) nach Anspruch 1, der ein weiteres vorstehendes Teil, das ein Trichter (2) ist, der in einer Fahrzeugbreitenrichtung geöffnet und geschlossen werden kann, und
eine Warnleuchte (E1), die entlang einer Endfläche des Trichters (2) angeordnet ist, umfasst,
wobei die lichtemittierenden Teile der Warnleuchte (E1) aufeinanderfolgend oder separat entlang der Endfläche des Trichters (2) angeordnet sind.

5. Asphaltfertiger (100) nach Anspruch 1, ferner umfassend: eine Arbeitsleuchte (W1-W4),
wobei die Warnleuchte (E1, E2, E3) so konfiguriert ist, dass sie eingeschaltet wird, wenn die Arbeitsleuchte (W1-W4) eingeschaltet wird.

6. Asphaltfertiger (100) nach Anspruch 1, wobei die Warnleuchte (E2, E3) so konfiguriert ist, dass sie in einer Bohlenabdeckung aufgenommen ist, während sich die Verlängerungs-/Zusammenziehbohle (31) in einem zusammengezogenen Zustand befindet.

7. Asphaltfertiger (100) nach Anspruch 6, wobei die Warnleuchte (E2, E3) an einer Vorderseite und einer Rückseite der Bohlenabdeckung angeordnet ist.

8. Asphaltfertiger (100) nach Anspruch 1, wobei die Warnleuchte (E1, E2, E3) konfiguriert ist zu blinken.

## Revendications

1. Une finisseuse d'asphalte (100) comprenant :
un tracteur (1) ;
une partie saillante (2, 31, 43) faisant saillie depuis une largeur du tracteur (1) ; et
un voyant d'avertissement (E1, E2, E3) disposé sur la partie saillante (2, 31, 43) de manière à augmenter la visibilité de la partie saillante (2, 31, 43)
dans lequel la partie saillante est une extension de table (31) qui est extensible et rétractable dans le sens de la largeur du véhicule, et
dans lequel le voyant d'avertissement (E2, E3) disposé sur l'extension de table (31) comprend une pluralité de parties électroluminescentes, et la pluralité de parties électroluminescentes sont disposées consécutivement ou séparément le long d'une direction d'extension/contraction de l'extension de table (31).

2. La finisseuse d'asphalte (100) selon la revendication 1, dans lequel le voyant d'avertissement (E2, E3) est agencé pour éclairer un espace devant et un espace derrière l'extension de table (31).

3. La finisseuse d'asphalte (100) selon la revendication 1, comprenant une partie saillante supplémentaire étant un versoir extensible/rétractable (43) qui est extensible et rétractable dans une direction de la largeur du véhicule, et
dans lequel des parties électroluminescentes sont disposées consécutivement ou séparément sur le versoir extensible/rétractable (43) le long d'une direction d'extension/retrait du versoir extensible/rétractable (43).

4. La finisseuse d'asphalte (100) selon la revendication 1, comprenant une partie saillante supplémentaire étant une trémie (2) qui peut être ouverte et fermée dans une direction de la largeur du véhicule, et un voyant d'avertissement (E1) disposé le long d'une surface d'extrémité de la trémie (2),
dans lequel les parties électroluminescentes du voyant d'avertissement (E1) sont disposées consécutivement ou séparément le long de la surface d'extrémité de la trémie (2).

5. La finisseuse d'asphalte (100) selon la revendication 1, comprenant en outre : un voyant de travail (W1-W4),
dans lequel le voyant d'avertissement (E1, E2, E3) est configuré pour être allumé lorsque le voyant de travail (W1-W4) est allumé.

6. La finisseuse d'asphalte (100) selon la revendication 1, dans lequel le voyant d'avertissement (E2, E3) est configuré pour être logé dans un couvercle de table tandis que la table extensible/rétractable (31) est dans un état rétracté.

7. La finisseuse d'asphalte (100) selon la revendication 6, dans lequel le voyant d'avertissement (E2, E3) est disposé à l'avant et à l'arrière du couvercle de table.

8. La finisseuse d'asphalte (100) selon la revendication 1, dans lequel le voyant d'avertissement (E1, E2, E3) est configuré pour clignoter.
